Europäisches Patentamt

European Patent Office

Office européen des brevets

(19)

(11) Numero de publication: **0 023 167**

**A1**

(12) **DEMANDE DE BREVET EUROPEEN**

(21) Numéro de dépôt: 80400977.7

(22) Date de dépôt: 30.06.80

(51) Int. Cl.³: **E 02 D 33/00**

(30) Priorité: 09.07.79 FR 7918176

(43) Date de publication de la demande:
28.01.81 Bulletin 81/4

(84) Etats Contractants Désignés:
AT DE GB IT LU NL SE

(71) Demandeur: Société Anonyme FRANCE-ATLAS
274, boulevard Clémenceau
Marcq-en-Baroeul (Nord)(FR)

(72) Inventeur: Coelus, Gaspar
Astridlaan 53
Nieuwpoort(BE)

(74) Mandataire: Lepage, Jean-Pierre
c/o BUGNION 23/25, rue N. Leblanc
F-59011 Lille Cedex - (Nord)(FR)

(54) **Procédé et dispositif d'essais dynamiques de pieux.**

(57) Le procédé est caractérisé par le fait que l'on libère instantanément une quantité d'énergie en direction du pieu (3), que l'on accumule cette énergie élastiquement et qu'on retransmet l'énergie accumulée à la tête du pieu (4) progressivement dans le temps, qu'on mesure et qu'on calcule à chaque instant la charge appliquée sur la tête du pieu (4), et le déplacement de celui-ci, ce qui permet de déduire en particulier la force portante ultime du pieu (3) et son tassement en fonction de la charge qui lui est appliquée

Le dispositif est caractérisé par le fait qu'il présente des moyens (12) pour libérer cette quantité d'énergie, un dispositif amortisseur (16) pour accumuler puis retransmettre cette énergie à la tête du pieu (3) et des moyens (40, 41) pour mesurer et calculer à tout instant la charge appliquée au pieu (3) et le déplacement de la tête du pieu (4).

Une autre caractéristique de l'invention est qu'on récupère l'energie restituee par le dispositif amortisseur (16), que l'on complète, pour reconstituer une nouvelle quantite d'énergie en vue d'un nouvel essai.

Application aux essais dynamiques de chargement de fondations.

EP 0 023 167 A1

.../...

Fig 1

- 1 -

L'invention est relative à un procédé et à un dispositif permettant l'exécution d'essais dynamiques de chargement de fondations.

Elle concerne par exemple l'essai des pieux de fondation, dont il est particulièrement important de connaître la résistance à la charge, c'est-à-dire la résistance à l'enfoncement dans le sol sous l'action d'un effort vertical appliqué à la tête du pieu. Elle concerne également la mesure du tassement des pieux en fonction des charges auxquelles ils sont soumis.

On déduit de ces deux caractéristiques la charge de service admissible, pour laquelle on prend un coefficient de sécurité, par exemple au moins égal à 2,5 , par rapport à la charge de rupture, ainsi que le tassement du pieu pour la charge de service qui doit être compatible avec la construction que les pieux sont destinés à porter.

Il est à peu près impossible de déterminer par calcul la résistance à la charge, dans la mesure où elle dépend de nombreux paramètres liés non seulement aux caractéristiques physiques du pieu, mais également à celles du sol qui l'entoure. On détermine par conséquent cette résistance par des essais pratiqués "in situ", c'est-à-dire sur le pieu enfoncé dans le sol à son emplacement définitif.

Plusieurs méthodes sont actuellement connues pour déterminer la résistance à la charge d'un pieu et son tassement. Une première méthode consiste à réaliser un essai de chargement statique du pieu. Selon cette méthode, un lest est disposé au-dessus de la tête du pieu par un réseau de poutrelles métalliques et d'une poutre maitresse. Entre la poutre maitresse et la tête du pieu, on interpose un vérin hydraulique, muni d'un manomètre étalonné dont on fait varier la pression par paliers, de manière à exercer sur la tête du pieu une force progressive. Le tassement du pieu peut être ainsi déterminé par mesure, la charge de rupture correspondant à la pression pour laquelle une augmentation faible entraîne une augmentation brutale du tassement.

Cette méthode statique présente de nombreux inconvénients, en effet sa mise en oeuvre est longue et exige une manutention importante. Par ailleurs, le lest qu'il est nécessaire de mettre en place au-dessus du pieu est considérable, car il peut être supérieur à 2,5 fois la charge de service. De plus, pour des gros pieux, on procède généralement par extrapolation pour déterminer la charge de rupture, ce qui conduit à des résultats imprécis, d'où nécessité de prévoir des marges de sécurité très importantes.

- 2 -

Il faut cependant remarquer que cet essai est bien adapté à la détermination de la charge de service admissible.

Il existe d'autres méthodes d'essais dynamiques de la charge d'un pieu, consistant à transmettre une impulsion à la tête du pieu, par le choc d'un mouton, et à étudier la propagation de cette impulsion le long du pieu. Une méthode dynamique reposant sur ce principe est connue sous le nom de méthode "T N O". Selon cette méthode, un mouton de poids relativement faible est projeté grâce à de l'air comprimé en direction de la tête du pieu. Il se produit un choc très bref, et le mouton possède au moment du choc une vitesse très grande. Il produit dans le pieu des grandes pressions et des grandes accélérations qui ne sont pas uniformes sur l'ensemble du pieu, et qui se propagent par ailleurs dans le sol entourant le pieu. Le travail de déformation très important provoqué par la chute du mouton entraîne dans le pieu et le sol voisin une vibration qui exclut la possibilité de relier un tassement à une réaction statique et à une charge de rupture.

Cette méthode "T N O" peut être utilisée pour la comparaison de la résistance de différents pieux, mais exige par ailleurs l'étalonnage d'un des pieux par un essai statique.

C'est également le cas des essais par mesure d'impédance dynamique consistant à créer et à étudier une vibration forcée dans le pieu.

Un des buts de la présente invention est de proposer un procédé et un dispositif d'essais dynamiques qui permette d'obtenir la courbe charge statique/tassement directement sans référence à un essai statique.

Un autre but de la présente invention est de proposer un procédé et un dispositif d'essais dynamiques qui évitent la propagation dans le pieu et dans le sol environnant d'une onde de choc entraînant des pressions et des contraintes importantes dans le pieu.

Un autre but de la présente invention est de proposer un procédé et un dispositif fiables, et pour lesquels les lois de la dynamique sont applicables.

D'autres buts et avantages de la présente invention apparaîtront au cours de la description qui va suivre, qui n'est cependant donnée qu'à titre indicatif, et n'a pas pour but de la limiter.

Le procédé d'essai dynamique de chargement d'un pieu "in situ" est caractérisé par le fait que :

- on libère instantanément une quantité d'énergie déterminée en direction du pieu,

- 3 -

- on accumule cette énergie élastiquement et on retransmet l'énergie accumulée à la tête du pieu progressivement dans le temps,

- on mesure et on calcule à chaque instant la charge appliquée sur la tête du pieu et le déplacement de celle-ci, ce qui permet de déduire en particulier la force portante ultime du pieu.

Le dispositif pour la mise en oeuvre du procédé est caractérisé par le fait qu'il comporte :

- des moyens pour libérer instantanément en direction du pieu une quantité d'énergie déterminée,

- un dispositif amortisseur intercalé entre les dits moyens et la tête du pieu, pour accumuler la dite quantité d'énergie et la retransmettre progressivement dans le temps à la tête du pieu,

- des moyens pour mesurer et calculer à tout instant la charge appliquée au pieu et le déplacement de la tête du pieu.

L'invention sera mieux comprise si l'on se réfère à la description ci-dessous, ainsi qu'aux dessins en annexe qui en font partie intégrante.

La figure 1 est une vue schématique explicative du dispositif d'essais dynamiques de pieux.

La figure 2 schématise ce que pourrait être la courbe de variations de quelques paramètres soit mesurés, soit calculés, en fonction du temps.

Selon l'invention, on libère une quantité d'énergie déterminée en direction de la tête du pieu. Cette énergie peut être composée par exemple par la chute d'un mouton tombant depuis une hauteur déterminée. Cette énergie peut donc se présenter sous forme d'énergie cinétique.

On accumule cette énergie élastiquement et on la retransmet progressivement en direction de la tête du pieu. Cette accumulation d'énergie puis sa retransmission est assurée par un organe amortisseur élastique. Cet organe amortisseur se raccourcit lorsqu'il accumule de l'énergie et se rallonge lorsqu'il restitue cette énergie.

L'amortisseur élastique est susceptible d'accumuler toute la quantité d'énergie qui a été libérée en direction du pieu. Ainsi, selon l'invention le choc brutal entre le mouton et la tête du pieu est évité.

L'utilisation de la chute d'un mouton pour constituer la quantité d'énergie déterminée qui est libérée en direction du pieu per-

- 4 -

met de disposer d'une quantité d'énergie relativement importante vis-à-vis des masses en mouvement, et en particulier de la masse du mouton. Par contre, l'organe amortisseur évite le phénomène de choc brutal, tel qu'il se produit dans les méthodes dynamiques connues et actuellement mises en oeuvre.

Il faut remarquer par ailleurs que la transmission de l'énergie accumulée par le mouton au pieu se fait progressivement dans le temps, grâce à l'organe amortisseur, contrairement donc aux méthodes dynamiques par lesquelles le mouton transmet au pieu son énergie en un temps très court . L'énergie transmise au pieu se transforme par compression de l'organe amortisseur en force croissante dans le pieu pour vaincre la résistance du sol qui croît avec le tassement et une partie est utilisée pour mettre en mouvement le pieu, le dispositif d'essai et une partie du sol adjacente au pieu d'une façon beaucoup plus lente qu'un mouvement avec choc. Une partie de l'énergie très faible est perdue sous forme de pertes de chaleur, frottements, etc....

L'énergie restante, accumulée par l'organe amortisseur, est restituée par celui-ci au mouton et constitue une partie d'une nouvelle quantité d'énergie qui pourra être libérée en direction du pieu pour un nouvel essai. Cette partie est complétée, naturellement, de manière à constituer totalement cette nouvelle quantité d'énergie pour un nouvel essai.

Selon l'invention, on mesure par ailleurs les paramètres qui permettent directement ou par calcul, de déterminer en particulier la force statique à laquelle a été soumis le pieu, son tassement et son déplacement. Par exemple, ces éléments peuvent être accessibles en mesurant la hauteur depuis laquelle on libère le mouton, l'accélération du mouton, l'accélération de la tête du pieu, et la hauteur à laquelle remonte le mouton. Les courbes d'accélération peuvent être enregistrées, et l'Homme de l'Art déterminera facilement, par exemple par intégration des courbes, les éléments déterminant les caractéristiques du pieu.

A titre d'exemple non limitatif, on a utilisé un organe amortisseur susceptible d'absorber une charge égale à 3 fois la charge nominale théorique du plus gros pieu prévu pour l'essai. Le temps de compression de l'organe amortisseur est fixé à 3 fois le temps d'impulsion du pieu le plus long à essayer. De cette manière, l'accélération maximale dans le pieu est de 15 g, alors qu'une chute directe du mouton sur le pieu aurait entraînée une accélération maximale dans le pieu d'environ 473.000 g.

Cette très faible accélération permet de dire que la résistance du fût du pieu n'a subi qu'une influence minime de l'essai dynamique. Par ailleurs, le rendement de l'essai est estimé à 93 % environ.

Egalement à titre d'exemple non limitatif, il est possible d'interpréter et d'utiliser les mesures de l'accélération du mouton et de la tête du pieu de la manière suivante.

L'équilibre du pieu en mouvement peut s'écrire :

$$F = R_{statique} + m\gamma$$

F désigne la force à laquelle est soumis le pieu, c'est-à-dire la force qu'exerce le mouton sur le pieu. Cette force peut donc s'écrire :

$$F = M\gamma_1$$

où M désigne la masse du mouton et $\gamma_1$ son accélération que l'on mesure en continu.

Pour revenir à la formule précédente, m désigne approximativement la masse du pieu et $\gamma$ son accélération. Lorsque cette accélération est nulle l'équilibre du pieu s'écrit :

$$M\gamma_1 = F \simeq R_{statique}$$

A partir donc de $\gamma_1$ et par double intégration de $\gamma$, on connaît le tassement du pieu, ce qui donne un point du diagramme du tassement du pieu en fonction de la charge statique qui lui est appliquée. Il faut cependant remarquer qu'il est possible que $\gamma$ ne soit pas nul dans tout le pieu, mais sa valeur extrême étant déjà très faible, l'erreur est minime.

Pour les grandes valeurs de la charge, il existera un état où $\gamma = \gamma_1$, le mouton et le pieu descendent alors à la même vitesse. Du fait de la transmission progressive de l'énergie, un minimum de la masse du sol se met en mouvement avec le pieu. De ce fait, étant donnés m, M et $\gamma$, on obtient un deuxième point du diagramme du tassement en fonction de la charge statique.

Par ailleurs, la hauteur de chute du mouton et sa hauteur de rebondissement, en tenant compte du rendement approximatif fournissent un moyen de contrôle du diagramme obtenu.

L'essai peut être renouvelé pour différentes hauteurs de chutes correspondant à différentes charges appliquées à la tête du pieu.

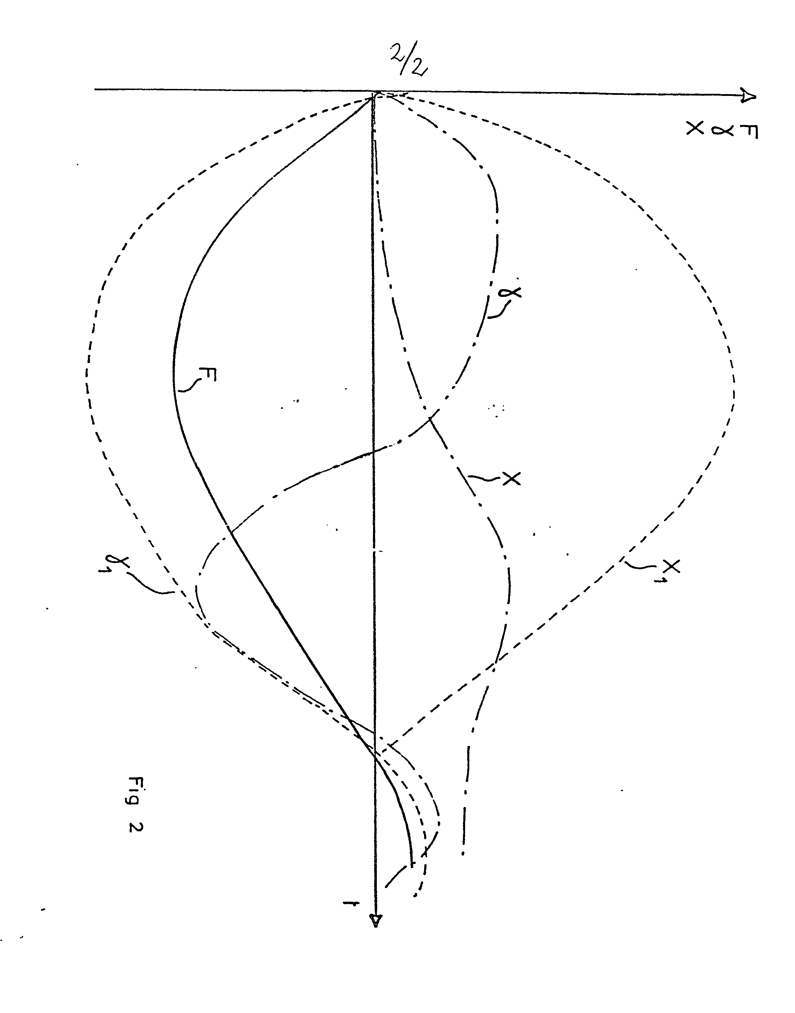

Il faut remarquer que le tassement calculé par le procédé selon l'invention peut être différent de celui déterminé par une méthode statique après un temps de stabilisation du pieu. Pour corriger cette divergence, on peut exécuter chaque chute de mouton 3 ou 4 fois pour une hauteur donnée. La figure 2 illustre schématiquement la variation des différents paramètres, dans le cas où la charge appliquée est supérieure à la résistance ultime du pieu. A partir de ces courbes, l'Homme de l'Art pourra déterminer le tassement du pieu en fonction de la charge statique et la résistance ultime du pieu. En particulier, il faut remarquer que , à droite de la figure, les parties adjacentes des deux courbes $X$ pour la tête du pieu et $X_1$ pour le mouton correspondent au déplacement simultané du mouton et du pieu. Les courbes $X$ et $X_1$ sont les déplacements du mouton et de la tête du pieu.

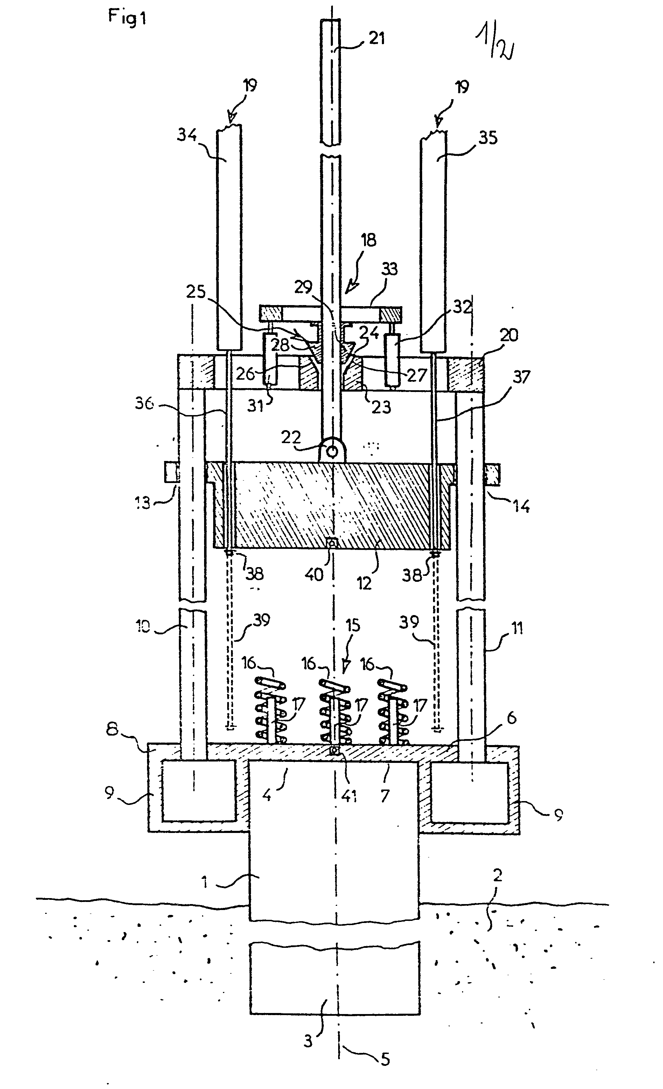

La figure 1 représente schématiquement le dispositif selon l'invention, mettant en oeuvre le procédé, dans un mode préférentiel de réalisation. Comme il apparaîtra au cours de la description qui va suivre, ce dispositif est susceptible de nombreuses variantes ne sortant pas du cadre de l'invention.

Dans cette figure, on a tout d'abord schématisé en 1 un pieu rectiligne, de tout type connu en soi, enfoncé verticalement dans le sol 2. La référence 3 désigne la pointe du pieu, c'est-à-dire son extrémité inférieure située dans le sol, et la référence 4 désigne la tête du pieu, c'est-à-dire son extrémité supérieure. Le pieu par ailleurs présente un axe 5 sensiblement vertical. L'invention s'applique également à un pieu incliné. Sa section transversale peut être ronde, carrée, rectangulaire ou de toute autre forme.

Le dispositif selon l'invention comprend tout d'abord un casque 8, qui recouvre la tête du pieu. Ce casque comprend une plaque de base 6 qui épouse la surface supérieure 7 de la tête 4 du pieu. Avantageusement, cette surface supérieure pourra être aménagée avant la pose du casque par tout moyen approprié à la portée de l'Homme de l'Art.

Le casque comprend par ailleurs des rebords 9 qui épousent la périphérie du pieu au niveau de sa tête. La plaque de base 6 est sensiblement perpendiculaire à l'axe 5 du pieu, c'est-à-dire sensiblement horizontale dans le cas d'un pieu sensiblement vertical.

Sur le casque 8 sont solidarisés des moyens de guidage pour le mouton. Ces moyens sont par exemple composés de deux colonnes 10 et 11 placées de part et d'autre de l'axe 5 et parallèlement à celui-ci. Ces deux colonnes permettent le guidage du mouton 12, représenté en position haute dans la figure 1. Au niveau des colonnes de guidage, le mouton présente deux orifices 13 et 14, portés par des rebords comme cela est schématisé dans la figure 1. Les orifices sont traversés par les colonnes, ce qui assure le guidage du mouton par coulissement, lors de son mouvement vertical de translation.

Le mouton est composé de tout matériau approprié, et par exemple de plaques pesantes de masses déterminées, dont il est possible de faire varier le nombre afin de disposer d'une masse variable et de l'adapter à la nature des pieux soumis à l'essai. Un matériau tel que de l'acier convient pour réaliser le mouton.

La plaque de base 6 présente sur sa surface supérieure, à l'aplomb vertical du mouton un dispositif amortisseur 15. Selon l'invention, de nombreux types de dispositifs amortisseurs conviennent. Par exemple, ils peuvent être du type hydraulique, pneumatique, hydropneumatique.

Dans un mode préférentiel de réalisation, le dispositif amortisseur est composé d'une pluralité de ressorts de compression 16 disposés en batterie. Ces ressorts peuvent être également réalisés au moyen de rondelles ressorts. Selon le mode de réalisation schématisé, les ressorts présentent un axe sensiblement parallèle à l'axe 5. De préférence, ils sont guidés par des tiges 17 présentant respectivement une longueur inférieure à la longueur des ressorts à l'état comprimé.

Ces ressorts sont disposés en batterie, parallèlement entre eux et plusieurs batteries peuvent être superposées en intercalant de préférence entre elles des plaques intermédiaires. Par ailleurs, le mouton peut présenter au niveau de sa surface de contact avec les ressorts une plaque de choc destinée à le protéger lors du choc avec la partie supérieure des ressorts.

En outre des moyens permettent de libérer et de retenir à volonté le mouton, ainsi que des moyens permettent de remonter le mouton à la hauteur voulue. Selon le mode de réalisation schématisé, ces moyens respectivement 18 et 19 sont portés par un support 20, composé par exemple de poutrelles, disposé au niveau de la partie supérieure des colonnes 10 et 11 et solidarisé à celles-ci.

De préférence, les moyens 18 pour libérer et retenir le mouton sont constitués par une barre 21 sensiblement verticale, coaxiale avec l'axe 5. Cette barre 21 est articulée en 22 sur la partie supérieure du mouton. Elle traverse le support 20 au niveau d'une douille 23 solidarisée à celui-ci. La douille 23 présente un orifice 24 dont une partie au moins, de préférence la partie supérieure, est évasée vers le haut. Elle pourra, par exemple, présenter la forme d'un tronc de cône ou d'un tronc de pyramide inversé. L'autre partie de l'orifice 24 présente une section sensiblement égale à la section de la barre 21.

Un dispositif de verrouillage 25 vient pincer la barre dans l'orifice 24 de la bague 23, en comblant l'espace compris entre la forme évasée de l'orifice et la barre. Par exemple, dans le cas d'une barre 21 de section rectangulaire, la partie évasée de l'orifice 24 est obtenue par l'inclinaison d'une partie 26 et 27 de deux faces opposées de l'orifice 24. Le dispositif de verrouillage est constitué de deux coins 28 et 29 dont la forme leur permet de venir se loger dans les espaces compris entre les faces inclinées 26 et 27 de l'orifice et les parois en regard de la barre 21.

Le verrouillage s'effectue par pincement conique lorsque les coins sont actionnés vers le bas, et lorsque le mouton a tendance à descendre. Par contre, lorsque les deux coins sont actionnés vers le haut, la barre est débloquée et peut coulisser au travers de l'orifice 24, libérant ainsi le mouton.

L'actionnement des deux coins, ou du dispositif de verrouillage est réalisé, par exemple, par deux vérins 31 et 32, d'axe sensiblement vertical, manoeuvrant vers le haut ou vers le bas un support 33 auquel sont solidarisés les coins 28 et 29. Il faut remarquer que la longueur de la barre 21 est telle que celle-ci reste engagée au moins dans le dispositif de verrouillage lorsque le mouton se trouve en position basse extrême.

Le dispositif de verrouillage qui vient d'être décrit n'est pas limitatif. Par exemple, la barre 21 pourrait être remplacée par une crémaillère, de préférence double, que des loquets verrouillent ou déverrouillent en s'engageant dans ses dents et en s'en dégageant. Cependant le dispositif composé de la barre 21 et des deux coins 28 et 29 présente l'avantage d'être autobloquant et de ne verrouiller le mouton que lorsque celui-ci a tendance à descendre.

Selon le mode de réalisation schématisé, le dispositif 19, permettant de remonter le mouton à la hauteur désirée, est composé de deux vérins 34 et 35 dont le corps est situé au-dessus du support 20 et solidarisé à celui-ci. L'axe des deux vérins est sensiblement parallèle à l'axe 5 du pieu, et de préférence ils sont situés symétriquement par rapport à l'axe 5. Dans un mode préférentiel de réalisation, leurs tiges respectives 36 et 37 traversent l'épaisseur du mouton, et comportent à leur extrémité inférieure tout dispositif approprié 38 pour retenir celui-ci. Ces tiges, cependant, ne sont pas solidarisées au mouton et sont susceptibles de coulisser dans les orifices de traversée du mouton. Les traits pointillés 39 représentent les tiges en position basse, le mouton étant supposé être retenu en position haute par le dispositif de verrouillage qui vient d'être décrit.

La disposition relative des deux vérins 34 et 35, ainsi que des deux colonnes de guidage 10 et 11 représentées dans la figure 1 n'est pas limitative, et l'on pourrait disposer ces différents éléments autrement les uns par rapport aux autres sans pour autant sortir du cadre de l'invention. Par exemple, les deux vérins 34 et 35 pourraient être respectivement placés en arrière de la colonne de guidage 10 et en avant de la colonne de guidage 11. Les colonnes de guidage et les vérins, cependant, sont symétriques par rapport à l'axe 5.

Tout dispositif approprié, pour déterminer la charge transmise par le mouton au pieu, et le tassement du pieu convient . Par exemple, il est possible de mesurer le déplacement du mouton et de la tête du pieu par des micromètres disposés en des endroits appropriés. Cependant, l'invention préfère utiliser deux accéléromètres d'un type connu, respectivement 40 et 41, placés d'une part sur le mouton, et d'autre part au niveau du casque 5. Ces accéléromètres délivrent des signaux électriques fonction de l'accélération respective du mouton et de la tête du pieu, qui pourront par exemple être enregistrés sur une bande magnétique à grande vitesse ou sur un oscilloscope enregistreur. Dans ce dernier cas, avantageusement, la courbe pourra être photographiée et constituer une preuve de l'essai.

L'Homme de l'Art déterminera facilement les organes de commande ainsi que la logique de commande des différents vérins, 34, 35, 31 et 32, qui de préférence sont des vérins hydrauliques. Il déterminera par ailleurs facilement le traitement à faire subir aux signaux électriques fournis par les deux accéléromètres 40 et 41, c'est-à-dire principalement une amplification, de manière à ce que ces signaux électriques soient visualisables et calibrés.

Le fonctionnement du dispositif selon l'invention est le suivant. Les deux tiges 36 et 37 des deux vérins 34 et 35 sont supposées être en leur position basse 39 représentée en trait pointillé. Les deux coins 28 et 29 verrouillent la barre 21 dans l'orifice 24. Le mouton quant à lui, se trouve en position haute, et sa hauteur est mesurée.

Pour réaliser l'essai, les deux coins 28 et 29 sont déverrouillés, libérant ainsi le mouton. Celui-ci en tombant en direction du pieu constitue une quantité d'énergie déterminée par sa hauteur de chute. Il entre ensuite en contact avec les ressorts, qu'il comprime. Ces derniers accumulent l'énergie constituée par la chute du mouton et la retransmettent progressivement dans le pieu. L'énergie qui n'a pas été utilisée est restituée par les ressorts, ce qui se traduit par le rebondissement du mouton. Lorsque celui-ci aura une vitesse sensiblement nulle, les deux coins verrouilleront la barre 21 de nouveau. Les deux coins 28 et 29 peuvent être mis en position verrouillée avant que le mouton ait atteint une vitesse nulle, étant donné qu'il n'exerce sur la barre 21 qu' une prise négligeable lorsque le mouton est animé d'une vitesse ascendante, et qu'ils ne sont réellement efficaces que lorsque le mouton a tendance à descendre.

La hauteur de remontée du mouton est également mesurée, et de la différence entre la hauteur de chute et la hauteur de remontée, on peut déduire l'énergie absorbée par le pieu. Par ailleurs, les accélérations respectives du mouton et de la tête du pieu ont été enregistrées, et permettent de déduire par intégration leur vitesse et leur déplacement respectifs. Par ailleurs, on peut également déduire de ces mesures la charge à laquelle est soumise le pieu et le tassement de celui-ci.

Après l'essai, les deux vérins 34 et 35 entrent en action et remontent le mouton jusqu'à une hauteur correspondant à une quantité d'énergie prédéterminée égale à la précédente ou différente suivant les cas. Lorsque le mouton est à la hauteur voulue, les coins sont verrouillés, et les deux tiges 36 et 37 des vérins sont redescendues dans leur position 39. Le dispositif est alors prêt pour un nouvel essai.

A partir des résultats de ces essais, l'Homme de l'Art pourra déterminer les caractéristiques du pieu, c'est-à-dire sa résistance à la charge et son tassement en fonction de la charge appliquée. L'invention permet ainsi de réaliser des essais simples et rapides. Les résultats obtenus sont par ailleurs remarquablement fiables et significatifs.

Naturellement, le procédé et le dispositif qui viennent d'être décrits sont susceptibles d'autres mises en oeuvre ne sortant pas de l'esprit de l'invention. En particulier, ils peuvent s'appliquer à tous les types de fondation, pieux inclinés, groupe de pieux, semelles, puits, pieux en bois, etc....

- 11 -

REVENDICATIONS

1. Procédé d'essai dynamique de chargement d'une fondation, telle que par exemple un pieu "in situ", caractérisé par le fait :

- on libère instantanément une quantité d'énergie déterminée en direction du pieu,

- on accumule cette énergie élastiquement et on retransmet l'énergie accumulée à la tête du pieu progressivement dans le temps,

- on mesure et on calcule à chaque instant la charge appliquée sur la tête du pieu et le déplacement de celle-ci, ce qui permet de déduire en particulier la force portante ultime du pieu et le tassement de celui-ci en fonction de la charge.

2. Procédé selon la revendication 1, caractérisé par le fait que l'on récupère la partie de l'énergie libérée qui n'a pas été absorbée par le pieu, dont on déduit la partie de la quantité d'énergie libérée qui a été absorbée par le pieu.

3. Procédé selon l'une quelconque des revendications 1 ou 2, caractérisé par le fait que l'on accumule, on retransmet et/ou on récupère la dite quantité d'énergie au moyen d'un organe amortisseur élastique, apte à se raccourcir suivant la direction du pieu d'une distance proportionnelle à l'énergie qu'il reçoit, et à s'allonger suivant la direction du pieu d'une distance proportionnelle à l'énergie qu'il restitue.

4. Procédé selon la revendication 3, caractérisé par le fait que l'on utilise un organe amortisseur apte à accumuler la totalité de la quantité d'énergie libérée.

5. Procédé selon la revendication 2, caractérisé par le fait que l'on récupère la partie de l'énergie libérée en direction du pieu qui est restituée, et qu'on la complète par une autre quantité d'énergie, de manière à reconstituer une nouvelle quantité d'énergie déterminée pour un nouvel essai.

6. Dispositif pour la mise en oeuvre du procédé, selon l'une quelconque des revendications précédentes, caractérisé par le fait qu'il comporte :

- des moyens pour libérer instantanément en direction de la tête du pieu une quantité d'énergie déterminée,

- un dispositif amortisseur intercalé entre les dits moyens et la tête du pieu pour accumuler la dite quantité d'énergie et la retransmettre progressivement dans le temps à la tête du pieu,

- 1² -

- des moyens pour mesurer ou calculer à tout instant la
charge appliquée au pieu et le déplacement de la tête du pieu.

7. Dispositif selon la revendication 6, caractérisé par le
fait qu'il comprend par ailleurs des moyens pour récupérer la partie
de la quantité d'énergie libérée en direction du pieu qui n'a pas été
absorbée par celui-ci.

8. Dispositif selon l'une quelconque des revendications 6
ou 7, caractérisé par le fait que les moyens pour libérer la quantité
d'énergie determinée, pour la transmettre et pour récupérer l'énergie
restituée comprennent un mouton susceptible de se déplacer selon un
axe sensiblement vertical, et guidé dans son mouvement, et des moyens
pour libérer le mouton à volonté depuis une hauteur déterminée et pour
le retenir.

9. Dispositif selon la revendication 8, caractérisé par
le fait que les dits moyens comprennent par ailleurs des moyens pour
compléter la quantité d'énergie restituée et récupérée, de manière à
reconstituer une nouvelle quantité d'énergie déterminée en vue d'un
nouvel essai.

10. Dispositif selon la revendication 6, caractérisé par
le fait qu'il comprend des moyens pour mesurer et enregistrer l'accélération, la vitesse et/ou le déplacement du mouton et de la tête du pieu.

11. Dispositif selon la revendication 6, caractérisé par
le fait qu'il comprend un casque solidaire de la tête du pieu, sur lequel est solidarisé le dispositif amortisseur.

12. Dispositif selon l'une quelconque des revendications 6
à 11, caractérisé par le fait que le dispositif amortisseur est du type
à ressorts de compression disposésparallèlement en batterie.

13. Dispositif selon la revendication 8, caractérisé par
le fait que les moyens pour retenir et libérer à volonté le mouton comprennent une barre sensiblement verticale, solidarisée au mouton par sa
partie supérieure, coulissant dans l'orifice d'une douille solidarisée
au casque, qui présente sur au moins une partie de sa surface intérieure
une forme de tronc de cône ou de tronc de pyramide inversé, et au moins
un coin de forme sensiblement complémentaire de l'espace compris entre
la partie de l'orifice en forme de tronc de cône ou de tronc de pyramide et les parois en regard de la barre, le ou les coins étant aptes à
retenir la barre et donc le mouton par pincement et à libérer le mouton
à volonté.

- 13 -

14. Dispositif selon la revendication 13, caractérisé par le fait que la section transversale de la barre est rectangulaire, que l'orifice de la bague présente sur deux de ses faces opposées une partie évasée, et que deux coins commandés par deux vérins, de forme complémentaire respectivement des espaces compris entre les deux faces évasées du couloir et la partie en regard de la tige sont aptes à retenir ou à libérer à volonté la barre et donc le mouton.

15. Dispositif selon la revendicaiton 9, caractérisé par le fait que deux vérins solidaires du casque, sensiblement parallèles à la direction de déplacement du mouton et situés au-dessus de sa position haute extrême complètent l'énergie restituée au mouton en relevant celui-ci jusqu'à une position correspondant à une nouvelle quantité d'énergie déterminée pour un nouvel essai.

Fig 1

0023167

1/2

Fig 2

**0023167**

Office européen
des brevets

Numéro de la demande

**RAPPORT DE RECHERCHE EUROPEENNE**

EP 80 40 0977

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| | BAUMASCHINE UND BAUTECHNIK, Nr. 2 février 1978, édité par Bauver-lag Wiesbaden DE U. SMOLTCZYK et al.: "Dynamische Untersuchung von Pfählen", pages 65-68 en entier . | 1,10 | E 02 D 33/00 |
| | -- | | |
| | FR - A - 2 335 653 (KOEHRING) | 1,3,4 | |
| | * Page 2, lignes 28-38; page 8, ligne 27-40; page 9, lignes 1-9; figure 1 * | | **DOMAINES TECHNIQUES RECHERCHES (Int. Cl. ³)** |
| | ---- | | E 02 D |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

X | Le présent rapport de recherche a ete établi pour toutes les revendications

| Lieu de la recherche | Date d'achèvement de la recherche | Examinateur |
|---|---|---|
| La Haye | 24-10-1980 | RUYMBEKE |

OEB Form 1503.1 06.78